# EUROPEAN PATENT APPLICATION

(11) **EP 4 654 279 A1**
(43) Date of publication of application: **26.11.2025**
(21) Application number: 25171408.5
(22) Date of filing: 17.04.2025
(51) Int. Cl.: H01M 4/131, H01M 4/1391, H01M 4/36, H01M 4/525, H01M 10/052

(54) **POSITIVE ELECTRODE ACTIVE MATERIALS, PREPARATION METHODS OF POSITIVE ELECTRODE ACTIVE MATERIALS, POSITIVE ELECTRODES, AND RECHARGEABLE LITHIUM BATTERIES**

(30) Priority: 26.04.2024 KR 20240056229
(71) Applicant: SAMSUNG SDI CO., LTD., Yongin-si, Gyeonggi-do 17084 (KR)
(72) Inventor: CHO, Yongmok, 17084 Yongin-si (KR); CHUNG, Hyunjei, 17084 Yongin-si (KR); CHOI, Minjae, 17084 Yongin-si (KR); KIM, Young-Ki, 17084 Yongin-si (KR)
(74) Representative: Marks & Clerk LLP

(57) **Abstract**

A positive electrode active material includes a first positive electrode active material including a first lithium cobalt-based oxide doped with aluminium and magnesium, and a second positive electrode active material including a second lithium cobalt-based oxide doped with aluminium and magnesium. An average particle diameter (D₅₀) of the second positive electrode active material is less than an average particle diameter (D₅₀) of the first positive electrode active material. The first positive electrode active material and the second positive electrode active material each include an aluminium coating layer on particle surfaces, with the aluminium coating layer of the first positive electrode active material being in a form of a shell that continuously surrounds the particle surfaces. An aluminium content based on 100 at% of cobalt and aluminium as measured by energy profiling energy dispersive spectroscopy (EP-EDS) on the surface of the first positive electrode active material is about 6 at% to about 10 at%.

## Description

### BACKGROUND

### 1. Field

Positive electrode active materials, preparation methods of positive electrode active materials, positive electrodes including the positive electrode active materials, and rechargeable lithium batteries are disclosed.

### 2. Description of the Related Art

Rechargeable lithium batteries having high energy density and easy portability are used as a driving power source in portable information devices such as cell phones, laptop computers, smart phones. Recently, research has been conducted for using rechargeable lithium batteries with high energy density as a driving power source or power storage power source for hybrid or electric vehicles.

The positive electrode active material used in rechargeable lithium batteries is mainly lithium cobalt oxide, and research is currently being conducted to achieve high capacity in positive electrode active materials. The lithium cobalt oxide has a high theoretical capacity of 274 mAh/g, but in reality, only half of the capacity can be used due to problems of capacity reduction caused by phase transition. In particular, charging and discharging at high voltages are required to achieve high energy density, but research is needed to increase structural stability due to the irreversible phase transition of lithium cobalt oxide and side reactions with the electrolyte that occur at high voltages.

### SUMMARY

Provided are a positive electrode active material exhibiting high stability at high voltage and a rechargeable lithium battery having a high capacity while having low resistance and improved cycle-life characteristics at high voltage and high temperature.

In example embodiments, a positive electrode active material includes a first positive electrode active material including a first lithium cobalt-based oxide doped with aluminium and magnesium; and a second positive electrode active material including a second lithium cobalt-based oxide doped with aluminium and magnesium; wherein an average particle diameter (D₅₀) of the second positive electrode active material is less than an average particle diameter (D₅₀) of the first positive electrode active material, the first positive electrode active material and the second positive electrode active material each include aluminium coating layers on particle surfaces, the aluminium coating layers of the first positive electrode active material are in a form of shells that surround the particle surfaces, and an amount of aluminium based on 100 at% of cobalt and aluminium as measured by energy profiling energy dispersive spectroscopy (EP-EDS) on the surface of the first positive electrode active material is about 6 at% to about 10 at%.

In some example embodiments, a method for preparing a positive electrode active material includes (i) preparing a first positive electrode active material including a first lithium cobalt-based oxide doped with aluminium and magnesium; (ii) adding aluminium sulfate to an aqueous solvent and mixing to prepare a coating solution; (iii) adding a first positive electrode active material into the coating solution and mixing to prepare a mixed solution; (iv) removing an aqueous solvent from the mixed solution, drying the obtained product, and performing a heat treatment to obtain a first positive electrode active material including an aluminium coating layer; (v) preparing a second positive electrode active material including a second lithium cobalt-based oxide doped with aluminium and magnesium, and having an average particle diameter (D₅₀) that is less than the average particle diameter (D₅₀) of the first positive electrode active material; (vi) adding aluminium oxide to the second positive electrode active material and performing heat treatment to obtain a second positive electrode active material including an aluminium coating layer; and (vii) mixing the first positive electrode active material including the aluminium coating layer and the second positive electrode active material including the aluminium coating layer.

In some example embodiments, a positive electrode includes a positive electrode current collector and a positive electrode active material layer on the positive electrode current collector, wherein the positive electrode active material layer includes the aforementioned positive electrode active material.

In some example embodiments, a rechargeable lithium battery including the positive electrode, a negative electrode, and an electrolyte is provided.

At least some of the above and other features of the invention are set out in the claims.

The positive electrode active material prepared according to example embodiments has high stability at high voltage, and a rechargeable lithium battery including the positive electrode active material can exhibit low resistance and excellent high-temperature cycle-life characteristics while having high capacity and high energy density.

### BRIEF DESCRIPTION OF THE DRAWINGS

FIGS. 1 to 4 are schematic views showing a rechargeable lithium battery according to some example embodiments.
FIG. 5 is an EP-EDS image of the positive electrode active material of Example 2.
FIG. 6 is an EP-EDS image of the positive electrode active material of Comparative Example 3.

### DETAILED DESCRIPTION

Hereinafter, specific embodiments will be described in detail so that those of ordinary skill in the art can easily implement them. However, this disclosure may be embodied in many different forms and is not limited to the example embodiments set forth herein.

The terminology used herein is used to describe embodiments only and is not intended to limit the present disclosure. A singular expression includes the plural expression unless the context clearly dictates otherwise.

"Combination thereof" means a mixture, a laminate, a composite, a copolymer, an alloy, a blend, a reaction product, and the like of the constituents.

It should be understood that terms such as "comprises," "includes," or "have" are intended to designate the presence of an embodied feature, number, step, element, or a combination thereof, but do not preclude the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter (D₅₀) may mean the diameter of particles having a cumulative volume of 50 volume% in the particle size distribution. As used herein, when a definition is not otherwise provided, the average particle diameter (D₅₀) means a diameter of particles having a cumulative volume of 50 volume% in the particle size distribution that is obtained by measuring the size (diameter or major axis length) of about 20 particles at random in a scanning electron microscope image.

"Or" is not to be construed as an exclusive meaning. For example, "A or B" is construed to include A, B, A+B, and the like.

"Metal" is interpreted as a concept including ordinary metals, transition metals and metalloids (semi-metals).

### Positive Electrode Active Material

In some example embodiments, a positive electrode active material includes a first positive electrode active material including a first lithium cobalt-based oxide doped with aluminium and magnesium. The positive electrode active material also includes a second positive electrode active material including a second lithium cobalt-based oxide doped with aluminium and magnesium. An average particle diameter (D₅₀) of the second positive electrode active material is less than an average particle diameter (D₅₀) of the first positive electrode active material. The first positive electrode active material and the second positive electrode active material each include aluminium coating layers on particle surfaces, the aluminium coating layer of the first positive electrode active material is in a form of a shell that continuously surrounds the particle surfaces, and an aluminium content based on 100 at% of cobalt and aluminium as measured by energy profiling energy dispersive spectroscopy (EP-EDS) on the surface of the first positive electrode active material is about 6 at% to about 10 at%.

In order to prevent shrinkage and expansion due to charge and discharge within the positive electrode active material and to stabilize the structure that may collapse due to rearrangement of the layered structure, a positive electrode active material with excellent stability at high voltage is prepared by doping with a different element. In particular, in order to enhance structure stability of the lithium cobalt-based oxides used as the positive electrode active materials, Al³⁺ and Mg²⁺ may be doped. Al³⁺ has a similar ion size to Co³⁺ (Al³⁺: 0.535 Å, Co³⁺: 0.545 Å) and the same oxidation number as the Co³⁺ and thus may be easy to use as a doping material. In addition, aluminium has stronger Al-O bonding energy (511±3 kJ/mol) than Co-O bonding energy (384.5±13.4 kJ/mol) and may not participate in an electrochemical reaction but may play a role in holding the structure of the active material during the shrinkage and expansion of the active material due to the charging and discharging. And aluminium has characteristics of suppressing structural changes of the positive electrode active material due to movement of lithium ions, so it has the advantage of being used as a doping material. In addition, Mg²⁺ may be substituted in the lithium layer during the doping to play a role of blocking rearrangement of an oxygen layer in the lithium layer during charging and discharging, which enhances structure stability.

In some example embodiments, two different types of lithium cobalt-based positive electrode active materials having different particle diameters may be mixed. Also the amount of aluminium and magnesium respectively doped on large particles and small particles, a ratio of the contents, etc. may be finely adjusted to provide a positive electrode active material capable of successfully securing structural stability at a high voltage and also improving capacity, resistance, and cycle-life characteristics at a high voltage.

In addition, some example embodiments provide a method of uniformly coating the aluminium at an optimal concentration on the surface of the positive electrode active material to maintain a stable structure even at a high voltage, realize high-capacity and long cycle-life characteristics, and improve storage characteristics at a high temperature.

When the aluminium is coated to strengthen the particle surfaces of the positive electrode active material, because the aluminium has a strong tendency to diffuse into particles, it is not easy to uniformly coat the aluminium as a shell at a high concentration on the particle surfaces. Some example embodiments provide for uniformly and thinly coating aluminium on the particle surfaces at a high concentration without increasing resistance. Accordingly, such an aluminium concentration on the particle surface, that is, a ratio of Al/(Co+Al) is confirmed to be 6 at% to 10 at%, which may be implemented by the method according to example embodiments. If the positive electrode active material according to example embodiments is applied to a rechargeable lithium battery cell, initial charge/discharge capacity and efficiency under a high voltage condition and high-temperature cycle-life characteristics are improved. In addition, high-temperature storage characteristics are enhanced.

### First Positive Electrode Active Material

The first positive electrode active material may include a first lithium cobalt-based oxide doped with aluminium and magnesium, and the first lithium cobalt-based oxide may be represented by Chemical Formula 1.

Chemical Formula 1: Liₐ₁Coₓ₁Mg_{y1}Al_{z1}M¹_{w1}O_{2-b1}X_{b1}

In Chemical Formula 1, 0.9≤a1≤1.8, 0.953≤x1≤0.965, 0.002≤y1≤0.005, 0.032≤z1≤0.04, 0≤w1≤0.002 (e.g., 0.001≤w1≤0.002), 0.9≤x1+y1+z1+w1≤1.1, and 0≤b1≤0.1, M¹ is at least one of B, Ba, Ca, Ce, Cr, Cu, Fe, Mn, Mo, Nb, Si, Sn, Sr, Ti, V, W, Zn, Y and Zr, and X is one or more elements selected from F, P, and S. In some embodiments, 0.954≤x1≤0.965, 0.002≤y1≤0.005, 0.032≤z1≤0.039, and 0.001≤w1≤0.002, 0.955≤x1≤0.965, 0.002≤y1≤0.005, 0.032≤z1≤0.038, and 0.001≤w1≤0.002. In some embodiments, w1 is 0. In some embodiments, b1 is 0. In some embodiments, w1 is 0 and b1 is 0; for example, 0.9≤a1≤1.8, 0.953≤x1≤0.965, 0.002≤y1≤0.005, 0.032≤z1≤0.04, w1=0, 0.9≤x1+y1+z1≤1.1, b1=0; 0.9≤a1≤1.8, 0.954≤x1≤0.965, 0.002≤y1≤0.005, 0.032≤z1≤0.039, w1=0, 0.9≤x1+y1+z1≤1.1, b1=0; or 0.9≤a1≤1.8, 0.955≤x1≤0.965, 0.002≤y1≤0.005, 0.032≤z1≤0.038, w1=0, 0.9≤x1+y1+z1≤1.1, b1=0. In addition, 0.9≤a1≤1.5, 0.9≤a1≤1.2, or 0.98≤a1≤1.0.

The first positive electrode active material including a first lithium cobalt-based oxide doped with aluminium and magnesium may be expressed as large particles. The average particle diameter (D₅₀) of the first positive electrode active material may be about 7 µm to about 30 µm, for example, about 9 µm to about 25 µm, about 10 µm to about 25 µm, or about 12 µm to about 20 µm. Here, the average particle diameter of the first positive electrode active material is larger than the average particle diameter of the second positive electrode active material (described below). The positive electrode active material according to some example embodiments is a mixture of a first positive electrode active material as large particles and a second positive electrode active material as small particles, thereby improving the mixture density and providing for high capacity and high energy density.

The doping amount of aluminium based on the total 100 wt% of the first lithium cobalt-based oxide may be less than or equal to about 1.2 wt% (less than or equal to about 12000 ppm), for example, less than or equal to about 1.18 wt%, less than or equal to about 1.16 wt%, less than or equal to about 1.14 wt%, less than or equal to about 1.12 wt%, or less than or equal to about 1.1 wt%; and may be greater than or equal to about 0.8 wt%, greater than or equal to about 0.82 wt%, greater than or equal to about 0.84 wt%, greater than or equal to about 0.86 wt%, greater than or equal to about 0.88 wt%, or greater than or equal to about 0.9 wt% (e.g., about 0.8 wt% to about 1.2 wt%, about 0.82 wt% to about 1.18 wt%, about 0.84 wt% to about 1.16 wt%, about 0.86 wt% to about 1.14 wt%, about 0.88 wt% to about 1.12 wt%, or about 0.9 wt% to about 1.1 wt%). The doping amount of aluminium based on the total 100 wt% of the first lithium cobalt-based oxide may be an amount excluding aluminium that is present in the aluminium coating layer (i.e., represents the doping amount within a core of the first positive electrode active material particles). When the doping amount of aluminium in the first lithium cobalt-based oxide is in these ranges, the positive electrode active material is structurally stable at high voltage, and the capacity, resistance, and cycle-life characteristics can all be improved.

The doping amount of magnesium based on the total 100 wt% of the first lithium cobalt-based oxide may be less than or equal to about 0.15 wt% (less than or equal to about 1500 ppm), for example, less than or equal to about 0.14 wt%, or less than or equal to about 0.13 wt%; and may be greater than or equal to about 0.01 wt%, greater than or equal to about 0.02 wt%, greater than or equal to about 0.03 wt%, greater than or equal to about 0.04 wt%, or greater than or equal to about 0.05 wt% (e.g., about 0.01 wt% to about 0.15 wt%, about 0.02 wt% to about 0.14 wt%, about 0.03 wt% to about 0.13 wt%, about 0.04 wt% to about 0.13 wt%, or about 0.05 wt% to about 0.13 wt%). When the doping amount of magnesium in the first lithium cobalt-based oxide is in these ranges, the positive electrode active material is structurally stable at high voltage and the capacity, resistance, and cycle-life characteristics may all be improved.

In some example embodiments, the first positive electrode active material may be included in an amount of about 50 wt% to about 95 wt%, for example, about 60 wt% to about 90 wt%, or about 70 wt% to about 90 wt%, based on total 100 wt% of the first positive electrode active material and the second positive electrode active material. When the content ratio of the first positive electrode active material and the second positive electrode active material are in such ranges, the positive electrode active material can have high capacity, can improve mixture density, and can exhibit high energy density.

In example embodiments, the first positive electrode active material includes the first positive electrode active material particle and an aluminium coating layer on the surface of the first positive electrode active material particle, and the aluminium coating layer on the surface of the first positive electrode active material particle may be in the form of a shell that continuously surrounds the surface of the first positive electrode active material particles. For example, the aluminium coating layer may be in the form of a shell that surrounds the entire surfaces of the first positive electrode active material particles. According to some example embodiments, the aluminium coating layer may be in a form that continuously surrounds around the surfaces of the first positive electrode active material particles and may be formed with a very thin and uniform thickness. Thus, the positive electrode active material does not increase resistance or decrease capacity, improves structural stability, effectively suppresses side reactions with electrolytes, reduces an amount of gas generated under high-voltage and high-temperature conditions, and achieves long cycle-life characteristics.

In some example embodiments, an aluminium content based on 100 at% of cobalt and aluminium as measured by energy profiling energy dispersive spectroscopy (EP-EDS) on the surface of the first positive electrode active material is about 6 at% to about 10 at%. The aluminium content on the surface of the first positive electrode active material, i.e., Al/(Co+Al), may be, for example, about 6.2 at% to about 9.8 at%, about 6.4 at% to about 9.6 at%, about 6.6 at% to about 9.4 at%, about 6.8 at% to about 9.2 at%, or about 7 at% to about 9 at%. This refers only to the aluminium content included in the coating layer, separate from the aluminium included in the particles. When the aluminium content on the surface of the first positive electrode active material particles satisfies these ranges, it is possible to form a coating layer having a uniform and thin thickness, the resistance of the positive electrode active material does not increase, and side reactions with the electrolyte are effectively suppressed. Thus, the cycle-life characteristics of a rechargeable lithium battery under high-voltage and high-temperature conditions are improved.

In some example embodiments, a thickness of aluminium on the surfaces of the particles of the first positive electrode active material may be about 5 nm to about 200 nm, for example, about 5 nm to about 150 nm, about 5 nm to about 100 nm, about 5 nm to about 80 nm, about 5 nm to about 50 nm, or about 10 nm to about 50 nm. When the aluminium coating layer satisfies these thickness ranges, the structural stability of the positive electrode active material can be improved and side reactions with the electrolyte can be effectively suppressed without increasing the resistance or decreasing the capacity due to the coating. The thickness of the coating layer can be measured, for example, by scanning electron microscope (SEM), transmission electron microscope (TEM), time-of-flight secondary mass spectroscopy (TOF-SIMS), X-ray photoelectron spectroscopy (XPS), or energy dispersive spectroscopy (EDS) analysis, for example, by EDS line profile analysis of a cross-section of the positive electrode active material.

The aluminium coating layer according to some example embodiments has a thin thickness of several to hundreds of nanometers, while having a uniform thickness. For example, a deviation in coating layer thickness within a single positive electrode active material particle may be less than or equal to about 20%, less than or equal to about 18%, or less than or equal to about 15%. Here, the deviation in coating layer thickness refers to a value regarding the thickness of the coating layer within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the above ranges means that a coating layer of uniform thickness is in a good form on the surface of the positive electrode active material particle. Accordingly, the structural stability of the positive electrode active material is improved, side reactions with the electrolyte may be effectively suppressed, and the increase in resistance or decrease in capacity due to coating may be minimized.

In some embodiments, the aluminium coating layer may comprise aluminium sulfate.

### Second Positive Electrode Active Material

The second positive electrode active material may include a second lithium cobalt-based oxide doped with aluminium and magnesium, and the second lithium cobalt-based oxide may be represented by Chemical Formula 2.

Chemical Formula 2: Liₐ₂Coₓ₂Mg_{y2}Al_{z2}M²_{w2}O_{2-b2}X_{b2}

In Chemical Formula 2, 0.9≤a2≤1.8, 0.953≤x2≤0.965, 0.002≤y2≤0.005, 0.032≤z2≤0.04, 0≤w2≤0.002 (e.g., 0.001≤w2≤0.002), 0.9≤x2+y2+z2+w2≤1.1, and 0≤b2≤0.1, M² is at least one of B, Ba, Ca, Ce, Cr, Cu, Fe, Mn, Mo, Nb, Si, Sn, Sr, Ti, V, W, Zn, Y and Zr, and X is one of F, P, and S. In some embodiments, 0.954≤x2≤0.965, 0.002≤y2≤0.005, 0.032≤z2≤0.039, and 0.001≤w2≤0.002, or 0.955≤x2≤0.965, 0.002≤y2≤0.005, 0.032≤z2≤0.038, and 0.001≤w2≤0.002. In some embodiments, w2 is 0. In some embodiments, b2 is 0. In some embodiments, w2 is 0 and b2 is 0; for example, 0.9≤a2≤1.8, 0.953≤x2≤0.965, 0.002≤y2≤0.005, 0.032≤z2≤0.04, w2=0, 0.9≤x2+y2+z2≤1.1, b2=0; 0.9≤a2≤1.8, 0.954≤x2≤0.965, 0.002≤y2≤0.005, 0.032≤z2≤0.039, w2=0, 0.9≤x2+y2+z2≤1.1, b2=0; or 0.9≤a2≤1.8, 0.955≤x2≤0.965, 0.002≤y2≤0.005, 0.032≤z2≤0.038, w2=0, 0.9≤x2+y2+z2≤1.1, b2=0. In addition, 0.9≤a2≤1.5, 0.9≤a2≤1.2, or 0.98≤a2≤1.0.

The second positive electrode active material including the second lithium cobalt-based oxide doped with aluminium and magnesium may be expressed as small particles. The average particle size (D₅₀) of the second positive electrode active material may be about 1 µm to about 9 µm, for example, about 1 µm to about 8 µm, or about 2 µm to about 6 µm. Here, the average particle diameter of the second positive electrode active material is less than the average particle diameter of the first positive electrode active material described above. According to some example embodiments, a positive electrode active material is a mixture of a first positive electrode active material as large particles and a second positive electrode active material as small particles, thereby improving the composite density and providing for high capacity and high energy density.

The doping amount of aluminium based on the total 100 wt% of the second lithium cobalt-based oxide may be less than or equal to about 1.2 wt% (less than or equal to about 12000 ppm), for example, less than or equal to about 1.18 wt%, less than or equal to about 1.16 wt%, less than or equal to about 1.14 wt%, less than or equal to about 1.12 wt%, or less than or equal to about 1.1 wt%; and may be greater than or equal to about 0.8 wt%, greater than or equal to about 0.82 wt%, greater than or equal to about 0.84 wt%, greater than or equal to about 0.86 wt%, greater than or equal to about 0.88 wt%, or greater than or equal to about 0.9 wt% (e.g., about 0.8 wt% to about 1.2 wt%, about 0.82 wt% to about 1.18 wt%, about 0.84 wt% to about 1.16 wt%, about 0.86 wt% to about 1.14 wt%, about 0.88 wt% to about 1.12 wt%, or about 0.9 wt% to about 1.1 wt%). The doping amount of aluminium based on the total 100 wt% of the second lithium cobalt-based oxide may be an amount excluding aluminium that is present in the aluminium coating layer (i.e., represents the doping amount within a core of the second positive electrode active material particles). When the doping amount of aluminium in the second lithium cobalt-based oxide satisfies these ranges, the positive electrode active material including the second lithium cobalt-based oxide is structurally stable at high voltage, and the capacity, resistance, and cycle-life characteristics can all be improved.

The doping amount of magnesium based on the total 100 wt% of the second lithium cobalt-based oxide may be less than or equal to about 0.15 wt% (less than or equal to about 1500 ppm), for example, less than or equal to about 0.14 wt%, or less than or equal to about 0.13 wt%; and may be greater than or equal to about 0.01 wt%, greater than or equal to about 0.02 wt%, greater than or equal to about 0.03 wt%, greater than or equal to about 0.04 wt%, or greater than or equal to about 0.05 wt% (e.g., about 0.01 wt% to about 0.15 wt%, about 0.02 wt% to about 0.14 wt%, about 0.03 wt% to about 0.13 wt%, about 0.04 wt% to about 0.13 wt%, or about 0.05 wt% to about 0.13 wt%). When the doping amount of magnesium in the second lithium cobalt-based oxide satisfies these ranges, the positive electrode active material including the second lithium cobalt-based oxide is structurally stable at high voltage and the capacity, resistance, and cycle-life characteristics may all be improved.

In some example embodiments, the doping amount of aluminium in the second lithium cobalt-based oxide may be greater than the doping amount of aluminium in the first lithium cobalt-based oxide. The doping amount of aluminium in the second lithium cobalt-based oxide may be greater than or equal to about 0.05 wt%, for example, about 0.05 wt% to about 0.50 wt%, about 0.05 wt% to about 0.45 wt%, about 0.05 wt% to about 0.40 wt%, about 0.05 wt% to about 0.35 wt%, or about 0.05 wt% to about 0.30 wt% higher than the doping amount of aluminium in the first lithium cobalt-based oxide. In this case, the positive electrode active material including these can maintain a very stable structure even after repeated charging and discharging at high voltage, and the capacity, resistance, and room-temperature/high-temperature cycle-life characteristics can all be improved.

In some example embodiments, the second positive electrode active material may be included in an amount of about 5 wt% to about 50 wt%, for example about 10 wt% to about 40 wt%, or about 10 wt% to about 30 wt%, based on total 100 wt% of the first positive electrode active material and the second positive electrode active material. When the content ratio of the first positive electrode active material and the second positive electrode active material is in these ranges, the positive electrode active material including first and second positive electrode active materials can realize high capacity, improve mixture density, and exhibit high energy density.

In some example embodiments, the second positive electrode active material includes an aluminium coating layer on the surfaces of the second positive electrode active material particles. A thickness of aluminium coating layer on the surfaces of the particles of the second positive electrode active material may be about 5 nm to about 200 nm, for example, about 5 nm to about 150 nm, about 5 nm to about 100 nm, about 5 nm to about 80 nm, about 5 nm to about 50 nm, or about 10 nm to about 50 nm. When the aluminium coating layer satisfies these thickness ranges, the structural stability of the positive electrode active material can be improved and side reactions with the electrolyte can be effectively suppressed without increasing the resistance or decreasing the capacity due to the coating. The thickness of the coating layer can be measured, for example, by SEM, TEM, TOF-SIMS, XPS, or EDS analysis, for example, by EDS line profile analysis of a cross-section of the positive electrode active material.

The coating layer according to some example embodiments has a thin thickness of several to hundreds of nanometers, while having a uniform thickness. For example, a deviation in coating layer thickness within a single positive electrode active material particle may be less than or equal to about 20%, less than or equal to about 18%, or less than or equal to about 15%. Here, the deviation in coating layer thickness refers to a value regarding the thickness of the coating layer within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the above ranges means that a coating layer of uniform thickness is in a good form on the surface of the positive electrode active material particle. Accordingly, the structural stability of the positive electrode active material is improved, side reactions with the electrolyte may be effectively suppressed, and the increase in resistance or decrease in capacity due to coating may be minimized.

In some embodiments, the aluminium coating layer may comprise aluminium oxide.

### Method of Preparing Positive Electrode Active Material

In some example embodiments, a method of preparing a positive electrode active material includes (i) preparing a first positive electrode active material including a first lithium cobalt-based oxide doped with aluminium and magnesium; (ii) adding aluminium sulfate to an aqueous solvent and mixing them to prepare a coating solution; (iii) adding a first positive electrode active material into the coating solution and mixing them to prepare a mixed solution; (iv) removing an aqueous solvent from the mixed solution, drying the obtained product, and performing a heat treatment to obtain a first positive electrode active material including an aluminium coating layer; (v) preparing a second positive electrode active material including a second lithium cobalt-based oxide doped with aluminium and magnesium, and having an average particle diameter (D₅₀) that is less than the average particle diameter (D₅₀) of the first positive electrode active material; (vi) adding aluminium oxide to the second positive electrode active material and performing heat treatment to obtain a second positive electrode active material including an aluminium coating layer; and (vii) mixing the first positive electrode active material including the aluminium coating layer and the second positive electrode active material including the aluminium coating layer. The above-described positive electrode active material may be prepared through such a preparation method.

The first positive electrode active material and the second positive electrode active material may each be prepared by a method of mixing a lithium raw material with a precursor, which is cobalt hydroxide, cobalt oxide, cobalt-based metal composite oxide, or a cobalt-based metal composite hydroxide and then performing heat treatment. The heat treatment may be performed at a temperature of, for example, about 800 °C to about 1100 °C, about 850 °C to about 1050 °C, or about 890 °C to about 1010 °C, and may be performed for about 5 hours to about 25 hours, for example, about 8 hours to about 15 hours. The precursor may be prepared, for example, by a general co-precipitation method.

The first cobalt-based metal composite hydroxide may be represented by Chemical Formula 11, and the second cobalt-based metal composite hydroxide may be represented by Chemical Formula 12.

Chemical Formula 11: COₓ₁₁Mg_{y11}Al_{z11}M¹¹_{w11}(OH)₂

In Chemical Formula 11, 0.953≤x11≤0.965, 0.002≤y11≤0.005, 0.032≤z11≤0.04, 0≤w11≤0.002 (e.g., 0.001≤w11≤0.002), and 0.9≤x11+y11+z11+w11≤1.1, and M¹¹ is at least one of B, Ba, Ca, Ce, Cr, Cu, Fe, Mn, Mo, Nb, Si, Sn, Sr, Ti, V, W, Zn, Y and Zr. In some embodiments, 0.954≤x11≤0.965, 0.002≤y11≤0.005, 0.032≤z11≤0.039, and 0.001≤w11≤0.002, or 0.955≤x11≤0.965, 0.002≤y11≤0.005, 0.032≤z11≤0.038, and 0.001≤w11≤0.002. In some embodiments, w11 is 0; for example, 0.953≤x11≤0.965, 0.002≤y11≤0.005, 0.032≤z11≤0.04, w11=0, 0.9≤x11+y11+z11≤1.1; 0.954≤x11≤0.965, 0.002≤y11≤0.005, 0.032≤z11≤0.039, w11=0, 0.9≤x11+y11+z11≤1.1; or 0.955≤x11≤0.965, 0.002≤y11≤0.005, 0.032≤z11≤0.038, w11=0, 0.9≤x11+y11+z11≤1.1.

Chemical Formula 12: Coₓ₁₂Mg_{y12}Al_{z12}M¹²_{w12}(OH)₂

In Chemical Formula 12, 0.953≤x12≤0.965, 0.002≤y12≤0.005, 0.032≤z12≤0.04, 0≤w12≤0.002 (e.g., 0.001≤w12≤0.002), and 0.9≤x12+y12+z12+w12≤1.1, and M¹² is at least one of B, Ba, Ca, Ce, Cr, Cu, Fe, Mn, Mo, Nb, Si, Sn, Sr, Ti, V, W, Zn, Y and Zr. In some embodiments, 0.954≤x12≤0.965, 0.002≤y12≤0.005, 0.032≤z12≤0.039, and 0.001≤w12≤0.002, or 0.955≤x12≤0.965, 0.002≤y12≤0.005, 0.032≤z12≤0.038, and 0.001≤w12≤0.002. In some embodiments, w12 is 0; for example, 0.953≤x12≤0.965, 0.002≤y12≤0.005, 0.032≤z12≤0.04, w12=0, 0.9≤x12+y12+z12≤1.1; 0.954≤x12≤0.965, 0.002≤y12≤0.005, 0.032≤z12≤0.039, w12=0, 0.9≤x12+y12+z12≤1.1; or 0.955≤x12≤0.965, 0.002≤y12≤0.005, 0.032≤z12≤0.038, w12=0, 0.9≤x12+y12+z12≤1.1.

The first cobalt-based metal composite hydroxide is in the form of particles and may have an average particle diameter of about 7 µm to about 30 µm (e.g., about 9 µm to about 25 µm, about 10 µm to about 25 µm, or about 12 µm to about 20 µm). The second cobalt-based metal composite hydroxide is in the form of particles and may have an average particle diameter of about 1 µm to about 9 µm (e.g., about 1 µm to about 8 µm, or about 2 µm to about 6 µm).

In a mixture including the first positive electrode active material and the second positive electrode active material, the first positive electrode active material may be included in an amount of about 50 wt% to about 95 wt%, for example, about 60 wt% to about 90 wt%, or about 70 wt% to about 90 wt%, based on total 100 wt% of the first positive electrode active material and the second positive electrode active material. The second positive electrode active material may be included in an amount of about 5 wt% to about 50 wt%, for example about 10 wt% to about 40 wt%, or about 10 wt% to about 30 wt% based on total 100 wt% of the first positive electrode active material and the second positive electrode active material. When the content ratio of the first positive electrode active material and the second positive electrode active material is in these ranges, the positive electrode active material including the first and second positive electrode active materials can realize high capacity, improve mixture density, and exhibit high energy density.

The aqueous solvent may include distilled water, an alcohol-based solvent, or a combination thereof.

The aluminium sulfate may be a raw material for forming a coating layer according to some example embodiments. The aluminium content in the aluminium sulfate may be about 6 at% to about 10 at%, for example, about 6.2 at% to about 9.8 at%, about 6.4 at% to about 9.6 at%, about 6.6 at% to about 9.4 at%, about 6.8 at% to about 9.2 at%, or about 7 at% to about 9 at%, based on 100 at% of the total cobalt and aluminium as measured by energy profiling energy dispersive spectroscopy (EP-EDS) on the surface of the finally obtained positive electrode active material,. By providing the aluminium coating content within these ranges, a coating layer having a uniform, thin thickness of several to hundreds of nanometers can be formed. Such a coating layer has the effect of reducing the amount of gas generated from a rechargeable lithium battery under high-voltage or high-temperature driving conditions and improving high-capacity and long-life characteristics.

In some example embodiments, a coating solution may be prepared by adding and mixing an aluminium precursor into an aqueous solvent, and then a first positive electrode active material may be added to the coating solution and the mixed to prepare a mixed solution. This is a salt-dissolving wet coating method and may be a pre-addition method in which the salt, which is the coating raw material, is first completely dissolved and then the first positive electrode active material is added.

In the pre-addition method, the mixing of aluminium sulfate with the aqueous solvent may be performed for about 1 minute to about 60 minutes, for example, for about 3 minutes to about 30 minutes, or for about 5 minutes to about 10 minutes. Additionally, the mixing speed can be about 100 rpm to about 800 rpm, for example about 200 rpm to about 600 rpm, or about 250 rpm to about 500 rpm. By using such mixing conditions, aluminium sulfate can be completely dissolved in an aqueous solvent to produce a colorless and transparent coating solution, and by using this coating solution, a uniform aluminium coating layer according to some example embodiments can be effectively formed. The pH of the mixed coating solution may be about 1.5 to about 3.5, for example, about 2.0 to about 3.4, about 2.5 to about 3.3, about 2.7 to about 3.3, or about 2.9 to about 3.2.

The first positive electrode active material is added to the prepared coating solution. By adding the first positive electrode active material while stirring the coating solution, the coating quality can be improved.

A time required to add the first positive electrode active material to the coating solution may be about 30 seconds/500 g to about 2 minutes/500 g, for example, about 30 seconds/500 g to about 1.5 minutes/500 g, etc. By appropriately controlling the addition speed, the pH of the supernatant can be appropriately controlled after coating is completed, thereby effectively inducing the formation of a uniform aluminium coating layer according to example embodiments.

The mixing time after adding the first positive electrode active material to the coating solution may be about 15 to about 60 minutes, for example, about 20 to about 50 minutes, or about 30 to about 45 minutes. In addition, a time from the start of adding the first positive electrode active material to the coating solution until the stirring is completed, i.e., the coating reaction time, may be appropriately adjusted within approximately 1 hour.

In some example embodiments, when the first positive electrode active material is added to the coating solution and mixing is stopped, i.e., when mixing is completed or coating is completed, the pH range of the supernatant may be about 5.5 to about 7.5. When the pH of the supernatant is within such a range, a uniform coating layer can be formed without becoming too acidic or alkaline.

After removing the aqueous solvent from the mixed solution, the obtained product may be dried, for example, at about 40 °C to about 240 °C, about 100 °C to about 220 °C, or about 150 °C to about 200 °C under a vacuum condition. With such conditions, a satisfactory coated product may be obtained.

After removing the aqueous solvent from the mixed solution, the obtained product is completed with drying and is referred to as a coated product. The aluminium-containing coating layer may have a fibrous shape, for example, a mesh shape or a spider web shape. Such meshes may be formed continuously across the entire surfaces of the particles. The mesh-shaped coating layer with a very thin and uniform thickness may surround the particles, thereby strengthening the surface of the positive electrode active material and enhancing structural stability and thus improving high-temperature and high-voltage characteristics.

If the process of mixing lithium raw material with a precursor, such as cobalt hydroxide or a cobalt-based metal composite hydroxide, and then heat-treating it is referred to as the first heat treatment, then the process of heat treating the coated product can be referred to as the second heat treatment.

In some example embodiments, the second heat treatment temperature range may be set to about 730 °C to about 1000 °C. The second heat treatment temperature range may be, for example, about 740 °C to about 1000 °C, about 750 °C to about 1000 °C, about 780 °C to about 1000 °C, or about 800 °C to about 1000 °C. When the second heat treatment temperature is set within these range, the tendency of aluminium to diffuse into the interior of the particles is reduced, such that the aluminium remains mainly on the surfaces of the particles. Further, the particle surfaces can be coated in the form of a very thin and uniformly thick shell. When controlled within the above heat treatment ranges, the aluminium content ratio on the particle surface, i.e., Al/(Co+Al), may be controlled to about 6 at% to about 10 at%. Additionally, the second heat treatment may be performed, for example, in an oxygen atmosphere, for about 2 to about 20 hours, or about 3 to about 10 hours.

### Positive Electrode

In some example embodiments, a positive electrode includes a positive electrode current collector and a positive electrode active material layer on the positive electrode current collector, wherein the positive electrode active material layer includes the aforementioned positive electrode active material. The positive electrode active material layer may further include other types of positive electrode active materials in addition to the aforementioned positive electrode active material. Additionally, the positive electrode active material layer may optionally further include a binder, a conductive material, or a combination thereof.

In some example embodiments, a loading level of the positive electrode active material layer may be about 10 mg/cm² to about 40 mg/cm², for example about 10 mg/cm² to about 30 about mg/cm², or about 10 mg/cm² to about 20 mg/cm². Additionally, a density of the positive electrode active material layer in the final compressed positive electrode may be greater than or equal to about 4.1 g/cc, for example about 4.1 g/cc to about 4.5 g/cc, or about 4.1 g/cc to about 4.4 g/cc. When applying the positive electrode active material according to some example embodiments, it is advantageous to implement such a loading level and positive electrode density, and a positive electrode that satisfies the loading level and positive electrode density in these range is suitable for providing a high-capacity, high-energy-density rechargeable lithium battery.

### Binder

The binder improves binding properties of positive electrode active material particles with one another and with a current collector. Examples of binders include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon. But the present disclosure is not limited to such examples.

### Conductive Material

The conductive material is included to provide electrode conductivity and any electrically conductive material may be used as a conductive material provided that it does not cause a chemical change. Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

The amount of the binder and the conductive material may be about 0.5 wt% to about 5 wt% based on 100 wt% of the positive electrode active material layer.

The positive electrode current collector may include aluminium, and the like, but is not limited thereto.

### Rechargeable Lithium Battery

Some example embodiments provide a rechargeable lithium battery including the aforementioned positive electrode, negative electrode, and electrolyte. As an example, the rechargeable lithium battery may include a positive electrode, a negative electrode, a separator between the positive electrode and the negative electrode, and an electrolyte solution.

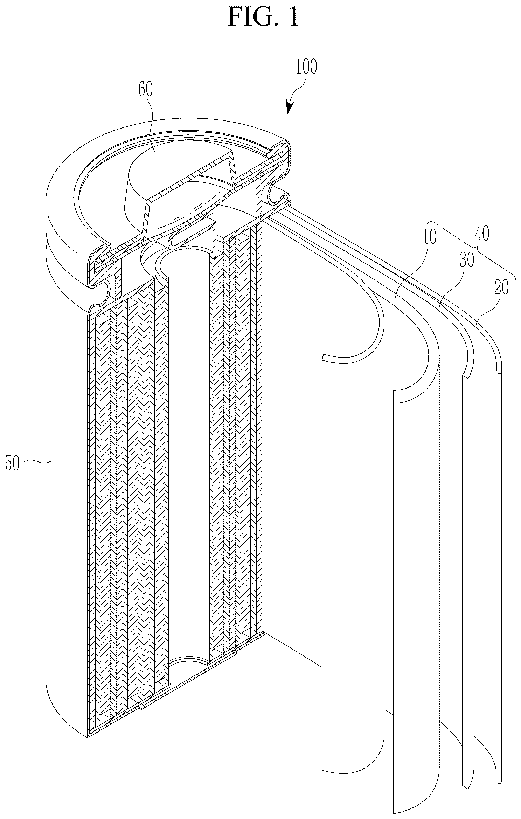

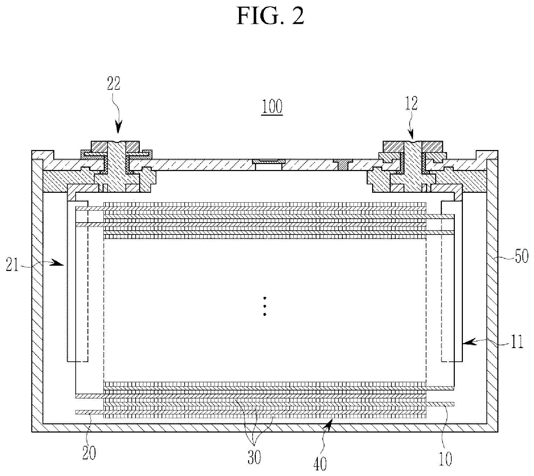

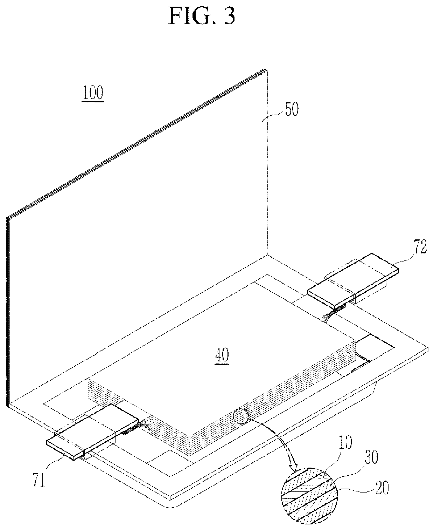

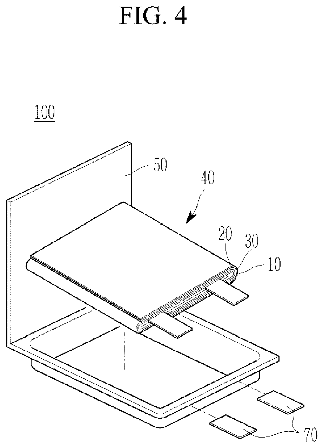

The rechargeable lithium battery may be classified into cylindrical, prismatic, pouch, coin, etc. depending on its shape. FIGS. 1 to 4 are schematic views showing rechargeable lithium batteries according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to outside of the battery.

The rechargeable lithium battery according to some example embodiments may be appropriately charged or driven at a high voltage. For example, a charging voltage of the rechargeable lithium battery may be greater than or equal to about 4.5 V, about 4.5 V to about 4.7 V, about 4.5 V to about 4.6 V, or about 4.5 V to about 4.55 V. The rechargeable lithium battery, to which the positive electrode active material of some example embodiments is applied, if charged at a high voltage, may have significantly reduced gas generation and realize high-capacity and long cycle-life characteristics.

### Negative Electrode

The negative electrode may include a current collector and a negative electrode active material layer on the current collector, and the negative electrode active material layer may further include a negative electrode active material, a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn (e.g., Na, K, Rb, Cs, Be, Mg, Ca, Sr, Si, Sb, Pb, In, Zn, Ba, Ge, Al, and Sn). The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy, or a combination thereof, In the Si-Q alloy, Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof (e.g., Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Tl, Ge, P, As, Sb, Bi, S, Se, Te, and a combination thereof). The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some example embodiments, the silicon-carbon composite may be in the form of silicon particles and amorphous carbon coated on the surface of the silicon particles. For example, silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, a content of silicon may be about 10 wt% to about 50 wt% and a content of amorphous carbon may be about 50 wt% to about 90 wt% based on 100 wt% of the silicon-carbon composite. In addition, when the composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). At this time, the atomic content ratio of Si:O, which indicates a degree of oxidation, may be about 99:1 to about 33:67. As used herein, when a definition is not otherwise provided, an average particle diameter (D₅₀) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used as a conductive material provided that it does not cause a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

An amount of the negative electrode active material may be about 95 wt% to about 99.5 wt% based on 100 wt% of the negative electrode active material layer, and an amount of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium, copper, magnesium, stainless steel, titanium, iron, cobalt, nickel, zinc, aluminium, germanium, lithium, or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent can be used alone or in a mixture of two or more types. When two or more types are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethyl carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. When the concentration of lithium salt is within such a range, the electrolyte solution has appropriate ionic conductivity and viscosity, and thus excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the following examples are only examples of the present disclosure, and the present disclosure is not limited to the following examples.

### Example 1

### Preparation of Positive Electrode Active Material

The first cobalt transition metal composite oxide (Co_{0.955}Mg_{0.005}Al_{0.04}O₂) having an Al content of 11000 ppm (1.1 wt%) and an Mg content of 1250 ppm (0.125 wt%) and Li₂CO₃ were mixed so that the total metal of the first cobalt transition metal composite oxide and lithium of Li₂CO₃ have a mole ratio of 1:1.04 and then, heat-treated under an air atmosphere at about 1000 °C for 10 hours to make a first lithium cobalt-based oxide (Li_{1.04}Co_{0.955}Mg_{0.005}Al_{0.04}O₂) having an average particle diameter (D₅₀) of about 20 µm.

A coating solution was prepared by adding aluminium sulfate and 600 g of distilled water to a 1 L reactor and stirring the mixture at about 500 rpm for about 5 minutes to dissolve the salt. It was confirmed that the salt was completely dissolved in the coating solution, which appeared colorless and transparent. 500 g of the first lithium cobalt-based oxide was added to the coating solution, while stirring, for 1.5 minutes and then, stirred together for 30 minutes. Herein, an aluminium content of the aluminium sulfate was 0.05 wt% based on 100 wt% of the total metal in a final positive electrode active material excluding lithium.

After removing the solvent from the mixed solution by using an aspirator and a filter press, a coated product was obtained by vacuum-drying at 190 °C.

The coated product was secondarily heat-treated at 750 °C for 8 hours under an air atmosphere to prepare a first positive electrode active material.

Subsequently, a second cobalt transition metal composite oxide (Co_{0.958}Al_{0.037}Mg_{0.005}O₂) having an Al content of 10000 ppm (1.0 wt%) and an Mg content of 1250 ppm (0.125 wt%) and Li₂CO₃ were mixed so that the total metal of the first cobalt transition metal composite oxide and lithium of Li₂CO₃ have a mole ratio of 1:1.02 and then, heat-treated at about 900 °C under an air atmosphere for 10 hours to make a second lithium cobalt-based oxide (Li_{1.02}Co_{0.958}Al_{0.037}Mg_{0.005}O₂) having an average particle diameter (D₅₀) of about 4 µm.

After adding aluminium oxide to the second lithium cobalt-based oxide, a heat treatment proceeded at 600 °C for 5 hours to prepare a second positive electrode active material.

The prepared first positive and second positive electrode active materials were mixed in a weight ratio of 8:2 to prepare a positive electrode active material.

### Manufacturing of Positive Electrode

98.5 wt% of the positive electrode active material, 1.0 wt% of a polyvinylidene fluoride binder, and 0.5 wt% of a carbon nanotube conductive material were mixed to prepare positive electrode active material layer slurry, and this positive electrode active material layer slurry was coated on an aluminium foil current collector and then, dried and compressed to manufacture a positive electrode. A loading level of the positive electrode active material layer was 20 mg/cm², and a density of the finally compressed positive electrode active material layer was about 4.1 g/cc.

### Manufacturing of Rechargeable Lithium Battery Cell

97.5 wt% of graphite negative electrode active material, 1.5 wt% of carboxymethyl cellulose, and 1 wt% of styrene butadiene rubber were mixed in a water solvent to prepare a negative electrode active material layer slurry. The negative electrode active material layer slurry was coated on a copper foil current collector and then dried and compressed to manufacture a negative electrode.

A polytetrafluoroethylene separator and an electrolyte prepared by dissolving 1 M LiPF₆ in a mixed solvent of ethylene carbonate and dimethyl carbonate in a volume ratio of 3:7 were used in a known method to manufacture a rechargeable lithium battery cell.

### Example 2

A rechargeable lithium battery cell was manufactured in substantially the same manner as in Example 1 except that in manufacturing the first positive electrode active material, the aluminium content of aluminium sulfate was 0.1 wt% based on 100 wt% of the total metal in the final positive electrode active material excluding lithium.

### Example 3

A rechargeable lithium battery cell was manufactured in substantially the same manner as in Example 1 except that in manufacturing the first positive electrode active material, the aluminium content of aluminium sulfate was designed to be 0.2 wt% based on 100 wt% of the total metal in the final positive electrode active material excluding lithium.

### Example 4

A rechargeable lithium battery cell was manufactured in substantially the same manner as in Example 1 except that in manufacturing the first positive electrode active material, the aluminium content of aluminium sulfate was designed to be 0.27 wt% based on 100 wt% of the total metal in the final positive electrode active material excluding lithium.

### Example 5

A rechargeable lithium battery cell was manufactured in substantially the same manner as in Example 1 except that the first positive electrode active material was prepared by using a first cobalt transition metal composite oxide (LiCo_{0.963}Mg_{0.004}Al_{0.033}O₂) having an Al content of 9000 ppm (0.9 wt%) and an Mg content of 1000 ppm (0.1 wt%), and the second positive electrode active material was prepared by using a second cobalt transition metal composite oxide (LiCo_{0.956}Mg_{0.004}Al_{0.04}O₂) having an Al content of 11000 ppm (1.1 wt%) and an Mg content of 1000 ppm (0.1 wt%).

### Example 6

A rechargeable lithium battery cell was manufactured in substantially the same manner as in Example 5 except that in manufacturing the first positive electrode active material, the aluminium content of aluminium sulfate was 0.1 wt% based on 100 wt% of the total metal in the final positive electrode active material excluding lithium.

### Example 7

A rechargeable lithium battery cell was manufactured in substantially the same manner as in Example 5 except that in manufacturing the first positive electrode active material, the aluminium content of aluminium sulfate was 0.2 wt% based on 100 wt% of the total metal in the final positive electrode active material excluding lithium.

### Example 8

A rechargeable lithium battery cell was manufactured in substantially the same manner as in Example 5 except that in manufacturing the first positive electrode active material, the aluminium content of aluminium sulfate was 0.27 wt% based on 100 wt% of the total metal in the final positive electrode active material excluding lithium.

### Example 9

A rechargeable lithium battery cell was manufactured in substantially the same manner as in Example 2 except that the first positive electrode active material was prepared by using a first cobalt transition metal composite oxide (LiCo_{0.956}Mg_{0.004}Al_{0.037}O₂) having an Al content of 10000 ppm (1.0 wt%) and an Mg content of 1000 ppm (0.1 wt%), and the second positive electrode active material was prepared by using a second cobalt transition metal composite oxide (LiCo_{0.956}Mg_{0.004}Al_{0.04}O₂) having an Al content of 11000 ppm (1.1 wt%) and an Mg content of 1000 ppm (0.1 wt%).

### Example 10

A rechargeable lithium battery cell was manufactured in substantially the same manner as in Example 9 except that in manufacturing the first positive electrode active material, the aluminium content of aluminium sulfate was 0.27 wt% based on 100 wt% of the total metal in the final positive electrode active material excluding lithium.

### Comparative Example 1

A rechargeable lithium battery cell was manufactured in substantially the same manner as in Example 1 except that the first positive electrode active material was prepared without the aluminium coating.

### Comparative Example 2

A rechargeable lithium battery cell was manufactured in substantially the same manner as in Example 1 except that the first positive electrode active material was prepared in a dry coating process of adding aluminium oxide to the first lithium cobalt-based oxide and then, heat-treating the mixture at 600 °C for 5 hours instead of the wet coating process of preparing a coating solution including distilled water and aluminium sulfate, adding the first lithium cobalt-based oxide to the coating solution and then, drying and heat-treating the mixture.

### Comparative Example 3

A rechargeable lithium battery cell was manufactured in substantially the same manner as in Comparative Example 2 except that the aluminium content of aluminium sulfate was 0.1 wt% based on 100 wt% of the total metal in the final positive electrode active material excluding lithium.

### Comparative Example 4

A rechargeable lithium battery cell was manufactured in substantially the same manner as in Comparative Example 2 except that the aluminium content of aluminium sulfate was 0.27 wt% based on 100 wt% of the total metal in the final positive electrode active material excluding lithium.

### Comparative Example 5

A rechargeable lithium battery cell was manufactured in substantially the same manner as in Example 5 except that the first positive electrode active material was prepared in a dry coating process of adding aluminium oxide to the first lithium cobalt-based oxide and then heat-treating the mixture at 600 °C for 5 hours instead of the wet coating process of preparing a coating solution including distilled water and aluminium sulfate, adding the first lithium cobalt-based oxide to the coating solution and then drying and heat-treating the mixture.

### Comparative Example 6

A rechargeable lithium battery cell was manufactured in substantially the same manner as in Comparative Example 5 except that the aluminium content of aluminium sulfate was 0.1 wt% based on 100 wt% of the total metal in the final positive electrode active material excluding lithium.

### Comparative Example 7

A rechargeable lithium battery cell was manufactured in substantially the same manner as in Comparative Example 5 except that the aluminium content of aluminium sulfate was 0.2 wt% based on 100 wt% of the total metal in the final positive electrode active material excluding lithium.

### Comparative Example 8

A rechargeable lithium battery cell was manufactured in substantially the same manner as in Comparative Example 5 except that the aluminium content of aluminium sulfate was designed to be 0.27 wt% based on 100 wt% of the total metal in the final positive electrode active material excluding lithium.

The positive electrode active materials according to Examples 1 to 10 and Comparative Examples 1 to 8 are summarized in Table 1.

**Table 1**

| | First positive electrode active material | | | | Second positive electrode active material | |
|---|---|---|---|---|---|---|
| | Doping amount of aluminium (wt%) | Doping amount of magnesiu m (wt%) | Coating method | Coating amount of alumini um (wt%) | Doping amount of aluminium (wt%) | Doping amount of magnesium (wt%) |
| Example 1 | 1.1 | 0.125 | wet | 0.05 | 1.0 | 0.125 |
| Example 2 | 1.1 | 0.125 | wet | 0.1 | 1.0 | 0.125 |
| Example 3 | 1.1 | 0.125 | wet | 0.2 | 1.0 | 0.125 |
| Example 4 | 1.1 | 0.125 | wet | 0.27 | 1.0 | 0.125 |
| Comparative Example 1 | 1.1 | 0.125 | - | - | 1.0 | 0.125 |
| Comparative Example 2 | 1.1 | 0.125 | dry | 0.05 | 1.0 | 0.125 |
| Comparative Example 3 | 1.1 | 0.125 | dry | 0.1 | 1.0 | 0.125 |
| Comparative Example 4 | 1.1 | 0.125 | dry | 0.27 | 1.0 | 0.125 |
| Example 5 | 0.9 | 0.1 | wet | 0.05 | 1.1 | 0.1 |
| Example 6 | 0.9 | 0.1 | wet | 0.1 | 1.1 | 0.1 |
| Example 7 | 0.9 | 0.1 | wet | 0.2 | 1.1 | 0.1 |
| Example 8 | 0.9 | 0.1 | wet | 0.27 | 1.1 | 0.1 |
| Example 9 | 1.0 | 0.1 | wet | 0.1 | 1.1 | 0.1 |
| Example 10 | 1.0 | 0.1 | wet | 0.27 | 1.1 | 0.1 |
| Comparative Example 5 | 0.9 | 0.1 | dry | 0.05 | 1.1 | 0.1 |
| Comparative Example 6 | 0.9 | 0.1 | dry | 0.1 | 1.1 | 0.1 |
| Comparative Example 7 | 0.9 | 0.1 | dry | 0.2 | 1.1 | 0.1 |
| Comparative Example 8 | 0.9 | 0.1 | dry | 0.27 | 1.1 | 0.1 |

### Evaluation Example 1: Aluminium Content on Surface of Active Material

The first positive electrode active materials according to Example 2 and Comparative Examples 3 and 4 were subjected to EP-EDS analysis to calculate a ratio (Al/(Co+Al)) of an Al content (at%) to 100 at% of a total content of Co and Al on the first positive electrode active material particle surfaces. The result is shown in Table 2. The EP-EDS analysis was performed by using a Helios^{™} G4 HX made by Thermo Fisher Scientific, under conditions of 3 kV and 0.8 nA.

**Table 2**

| | Al/(Co+Al) on particle surface (at%) |
|---|---|
| Example 2 | 7.60 |
| Comparative Example 3 | 4.99 |
| Comparative Example 4 | 8.28 |

Referring to Table 2, Example 2 and Comparative Example 3 used the same first and second lithium cobalt-based oxides but were different in that in Example 2 the aluminium coating layer of the first positive electrode active material was formed through wet coating, whereas in Comparative Example 3 the aluminium coating layer of the first positive electrode active material was formed through dry coating. As compared to Comparative Example 3, it can be seen that in Example 2 the aluminium content on the positive electrode active material surface was improved.

In addition, it can be seen that in order to exhibit a similar aluminium content on the positive electrode active material as that of Example 2 through dry coating, an aluminium content of aluminium sulfate should be designed to be 0.27 wt% based on 100 wt% of total metal in a final positive electrode active material excluding lithium as shown in Comparative Example 4, wherein capacity and cycle-life characteristics were deteriorated as described below.

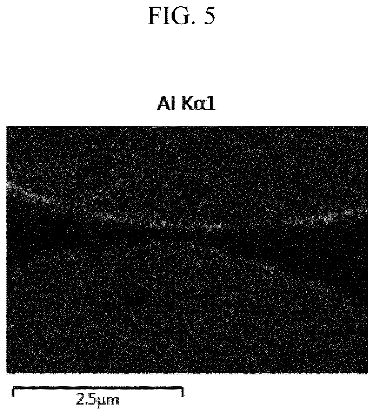

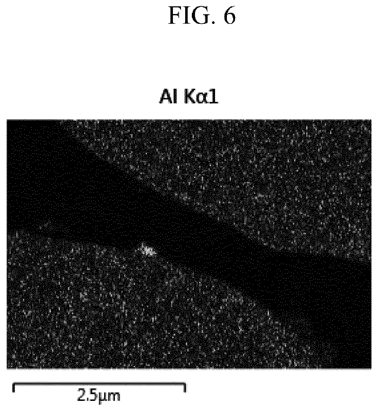

Subsequently, the first positive electrode active materials of Example 2 and Comparative Example 3 were imaged by EP-EDS, and the results are shown in FIGS. 5 and 6. The EP-EDS analysis was performed by using Helios^{™} G4 HX made by Thermo Fisher Scientific under conditions of 5 kV and 3.2 nA. Referring to FIG. 5, it can be seen that aluminium was coated in the form of a thin film on the particle surfaces. On the other hand, referring to FIG. 6, it can be seen that aluminium was not uniformly distributed but rather in the form of particles or locally agglomerated on the particle surfaces. Thus, it is confirmed that the wet coating of Example 2 increased the aluminium content on the surfaces and enabled uniform coating as compared with the dry coating of Comparative Example 3.

### Evaluation Example 2: Evaluation of Initial Capacity

The rechargeable lithium battery cells of Examples 1 to 10 and Comparative Examples 1 to 8 were charged to an upper limit voltage of 4.59 V at a constant current of 0.2 C and discharged to a cut-off voltage of 3.0 V at 0.2 C at 25 °C to measure initial discharge capacity and initial charge capacity, which were used to calculate a ratio of initial discharge capacity to initial charge capacity as efficiency. The results are shown in Table 3.

### Evaluation Example 3: Evaluation of High-temperature Cycle-life

After the initial charging and discharging of Evaluation Example 2, the cells were charged 30 times or more at 1.0 C within a voltage range of 3.0 V to 4.59 V and discharged at 1.0 C at 45 °C to calculate a ratio of 30th cycle discharge capacity to the initial discharge capacity. The results are shown as the high-temperature cycle-life in Table 3.

**Table 3**

| | Capacity (mAh/g) | | Efficiency (%) | 4.59 V high-temperature cycle-life (%) |
|---|---|---|---|---|
| | Initial charge capacity | Initial discharge capacity | | |
| Example 1 | 215.2 | 193.5 | 89.91 | 75.70 |
| Example 2 | 214.7 | 191.2 | 89.08 | 76.71 |
| Example 3 | 213.5 | 189.8 | 88.89 | 74.20 |
| Example 4 | 212.2 | 188.4 | 88.80 | 65.20 |
| Comparative Example 1 | 215.7 | 194.3 | 90.07 | 60.02 |
| Comparative Example 2 | 215.0 | 193.7 | 90.09 | 66.50 |
| Comparative Example 3 | 214.2 | 192.5 | 89.85 | 67.92 |
| Comparative Example 4 | 212.0 | 189.1 | 89.20 | 55.90 |
| Example 5 | 214.8 | 195.5 | 91.02 | 78.70 |
| Example 6 | 215.0 | 194.6 | 90.50 | 79.50 |
| Example 7 | 214.0 | 191.6 | 89.50 | 78.20 |
| Example 8 | 213.0 | 189.1 | 88.80 | 68.80 |
| Example 9 | 213.8 | 193.5 | 90.50 | 81.20 |
| Example 10 | 211.0 | 187.6 | 88.90 | 69.20 |
| Comparative Example 5 | 214.7 | 195.4 | 91.01 | 68.70 |
| Comparative Example 6 | 214.1 | 194.4 | 90.80 | 68.50 |
| Comparative Example 7 | 213.9 | 191.2 | 89.40 | 66.80 |
| Comparative Example 8 | 212.4 | 188.8 | 88.90 | 58.20 |

Referring to Table 3, Comparative Examples 1 to 8 were found to exhibit significantly low 4.59 V high-temperature cycle-life of less than 70%. On the other hand, Examples 1 to 4 exhibited higher 4.59 V high-temperature cycle-life than Comparative Examples 1 to 4, and Examples 5 to 8 were found to have higher 4.59 V high-temperature cycle-life than Examples 1 to 4 as well as Comparative Examples 5 to 8.

For example, Example 6 and Comparative Example 6 had the same aluminium content of 0.9 wt% in the first positive electrode active material and the same aluminium content of 1.0 wt% in the second positive electrode active material but adopted a different aluminium coating method for the first positive electrode active material, which was respectively wet or dry methods. Herein, Example 6, compared with Comparative Example 6, exhibited excellent 4.59 V high-temperature cycle-life. In addition, Example 2 and Comparative Example 3 had the same aluminium content of 1.1 wt% in the first positive electrode active material and the same aluminium content of 1.0 wt% in the second positive electrode active material but adopted a different aluminium coating method for the first positive electrode active material, which was respectively wet and dry methods. Example 2, as compared with Comparative Example 2, exhibited excellent 4.59 V high-temperature cycle-life.

On the other hand, Examples 2 and 6 adopted the same wet coating method for the first positive electrode active material and had the same coating content of 0.1 wt% but were different in that the aluminium content of the first positive electrode active material of Example 2 was greater than that of the second positive electrode active material. And in Example 6, the aluminium content of the second positive electrode active material was greater than that of the first positive electrode active material. And Example 6 was confirmed to exhibit excellent 4.59 V high-temperature cycle-life.

While this disclosure has been described in connection with what is presently considered to be practical example embodiments, the disclosure is not limited to the disclosed embodiments. On the contrary, the disclosure covers various modifications and equivalent arrangements.

**<Description of Symbols>**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

Embodiments are set out in the following clauses:
Clause 1. A positive electrode active material, comprising
   a first positive electrode active material including a first lithium cobalt-based oxide doped with aluminum and magnesium; and
   a second positive electrode active material including a second lithium cobalt-based oxide doped with aluminum and magnesium;
   wherein an average particle diameter (D₅₀) of the second positive electrode active material is smaller than an average particle diameter (D₅₀) of the first positive electrode active material,
   the first positive electrode active material and the second positive electrode active material each include an aluminum coating layer on a particle surface,
   the aluminum coating layer of the first positive electrode active material is in a form of a shell that continuously surrounds the particle surface, and
   an aluminum content based on 100 at% of cobalt and aluminum as measured by energy profiling energy dispersive spectroscopy (EP-EDS) on the surface of the first positive electrode active material is about 6 at% to about 10 at%.
Clause 2. The positive electrode active material of clause 1, wherein
   the first lithium cobalt-based oxide doped with aluminum and magnesium is represented by Chemical Formula 1:

      [Chemical Formula 1] Liₐ₁Coₓ₁Mg_{y1}Al_{z1}M¹_{w1}O_{2-b1}X_{b1}
   wherein, in Chemical Formula 1, 0.9≤a1≤1.8, 0.953≤x1≤0.965, 0.002≤y1≤0.005, 0.032≤z1≤0.04, 0.001≤w1≤0.002, 0.9≤x1+y1+z1+w1≤1.1, and 0≤b1≤0.1, M¹ is at least one element selected from B, Ba, Ca, Ce, Cr, Cu, Fe, Mn, Mo, Nb, Si, Sn, Sr, Ti, V, W, Zn, and Zr, and X is one or more elements selected from F, P, and S.
Clause 3. The positive electrode active material of clause 1 or clause 2, wherein
   an average particle diameter (D₅₀) of the first positive electrode active material is about 7 µm to about 30 µm.
Clause 4. The positive electrode active material of any one of clauses 1 to 3, wherein
   the second lithium cobalt-based oxide doped with the aluminum and magnesium is represented by Chemical Formula 2:

      [Chemical Formula 2] Liₐ₂Coₓ₂Mg_{y2}Al_{z2}M²_{w2}O_{2-b2}X_{b2}
   wherein, in Chemical Formula 2, 0.9≤a2≤1.8, 0.953≤x2≤0.965, 0.002≤y2≤0.005, 0.032≤z2≤0.04, 0.001≤w2≤0.002, 0.9≤x2+y2+z2+w2≤1.1, and 0≤b2≤0.1, M² is at least one element selected from B, Ba, Ca, Ce, Cr, Cu, Fe, Mn, Mo, Nb, Si, Sn, Sr, Ti, V, W, Zn, and Zr, and X is one or more elements selected from F, P, and S.
Clause 5. The positive electrode active material of any one of clauses 1 to 4, wherein
   an average particle diameter (D₅₀) of the second positive electrode active material is about 1 µm to about 9 µm.
Clause 6. The positive electrode active material of any one of clauses 1 to 5, wherein
   a doping amount of aluminum based on total 100 wt% of the first lithium cobalt oxide is about 0.9 wt% to about 1.1 wt%, and
   an aluminum doping amount based on 100 wt% of the total second lithium cobalt-based oxide is about 0.9 wt% to about 1.1 wt%.
Clause 7. The positive electrode active material of any one of clauses 1 to 6, wherein
   a doping amount of aluminum in the second lithium cobalt-based oxide is greater than a doping amount of aluminum in the first lithium cobalt-based oxide.
Clause 8. The positive electrode active material of clause 7, wherein
   the doping amount of aluminum in the second lithium cobalt-based oxide is about 0.05 wt% to about 0.5 wt% higher than the doping amount of aluminum in the first lithium cobalt-based oxide.
Clause 9. The positive electrode active material of any one of clauses 1 to 8, wherein
   the doping amount of magnesium based on total 100 wt% of the first lithium cobalt-based oxide is about 0.05 wt% to about 0.15 wt%, and
   the doping amount of magnesium based on total 100 wt% of the second lithium cobalt-based oxide is about 0.05 wt% to 0.15 wt%.
Clause 10. The positive electrode active material of any one of clauses 1 to 9, wherein
   based on total 100 wt% of the first positive electrode active material and the second positive electrode active material, the first positive electrode active material is included in an amount of about 50 wt% to about 95 wt% and the second positive electrode active material is included in an amount of about 5 wt% to about 50 wt%.
Clause 11. The positive electrode active material of any one of clauses 1 to 10, wherein
   the aluminum coating layer has a thickness of about 5 nm to about 200 nm.
Clause 12. The positive electrode active material of any one of clauses 1 to 11, wherein
   a deviation in the thickness of the coating layer within a single positive electrode active material particle is less than or equal to about 20%.
Clause 13. A method for preparing a positive electrode active material, comprising:
   (i) preparing a first positive electrode active material including a first lithium cobalt-based oxide doped with aluminum and magnesium;
   (ii) adding aluminum sulfate to an aqueous solvent and mixing them to prepare a coating solution;
   (iii) adding a first positive electrode active material into the coating solution and mixing them to prepare a mixed solution;
   (iv) removing an aqueous solvent from the mixed solution, drying the obtained product, and performing a heat treatment to obtain a first positive electrode active material including an aluminum coating layer;
   (v) preparing a second positive electrode active material including a second lithium cobalt-based oxide doped with aluminum and magnesium, and having an average particle diameter (D₅₀) smaller than the average particle diameter (D₅₀) of the first positive electrode active material;
   (vi) adding aluminum oxide to the second positive electrode active material and performing heat treatment to obtain a second positive electrode active material including an aluminum coating layer; and
   (vii) mixing the first positive electrode active material including the aluminum coating layer and the second positive electrode active material including the aluminum coating layer.
Clause 14. The method of clause 13, wherein
   in the (iii), a time required to add the first positive electrode active material into the coating solution is about 30 seconds/500 g to about 2 minutes/500 g,
   a mixing time after adding the first positive electrode active material to the coating solution is about 15 to about 60 minutes, and
   pH of the supernatant after mixing is about 5.5 to about 7.5.
Clause 15. The method of clause 13 or clause 14, wherein
   in the (iv), a coated product that has completed drying the obtained product includes an aluminum coating layer on the particle surface, and the aluminum coating layer has a mesh or spider web shape, and
   the heat treatment is performed at a temperature range of about 730 °C to about 1000 °C.
Clause 16. A positive electrode, comprising
   a positive electrode current collector, and
   a positive electrode active material layer on the positive electrode current collector,
   wherein the positive electrode active material layer includes the positive electrode active material of any one of clauses 1 to 12.
Clause 17. The positive electrode of clause 16, wherein
   a loading level of the positive electrode active material layer is about 10 mg/cm² to about 30 mg/cm².
Clause 18. The positive electrode of clause 16 or clause 17, wherein
   a density of the positive electrode active material layer is about 4.2 g/cc to about 4.5 g/cc.
Clause 19. A rechargeable lithium battery, comprising
   the positive electrode of any one of clauses 16 to 18;
   a negative electrode; and
   an electrolyte.
Clause 20. The rechargeable lithium battery of clause 19, wherein
   the rechargeable lithium battery has a charging voltage of greater than or equal to about 4.5 V.

## Claims

1. A positive electrode active material comprising:
a first positive electrode active material including a first lithium cobalt-based oxide doped with aluminium and magnesium; and
a second positive electrode active material including a second lithium cobalt-based oxide doped with aluminium and magnesium,
wherein an average particle diameter (D₅₀) of the second positive electrode active material is less than an average particle diameter (D₅₀) of the first positive electrode active material,
wherein the first positive electrode active material and the second positive electrode active material each include aluminium coating layers on particle surfaces,
wherein the aluminium coating layers of the first positive electrode active material are in a form of shells that surround the particle surfaces, and
wherein an amount of aluminium based on 100 at% of cobalt and aluminium as measured by energy profiling energy dispersive spectroscopy on a surface of the first positive electrode active material is about 6 at% to about 10 at%.

2. The positive electrode active material as claimed in claim 1, wherein the first lithium cobalt-based oxide doped with aluminium and magnesium is represented by Chemical Formula 1:
Liₐ₁Coₓ₁Mg_{y1}Al_{z1}M¹_{w1}O_{2-b1}X_{b1}
with 0.9≤a1≤1.8, 0.953≤x1≤0.965, 0.002≤y1≤0.005, 0.032≤z1≤0.04, 0≤w1≤0.002, 0.9≤x1+y1+z1+w1≤1.1, and 0≤b1≤0.1, with M¹ being at least one of B, Ba, Ca, Ce, Cr, Cu, Fe, Mn, Mo, Nb, Si, Sn, Sr, Ti, V, W, Zn, Y and Zr, and with X being one of F, P, and S.

3. The positive electrode active material as claimed in claim 1 or claim 2, wherein an average particle diameter (D₅₀) of the first positive electrode active material is about 7 µm to about 30 µm.

4. The positive electrode active material as claimed in any one of claims 1 to 3, wherein the second lithium cobalt-based oxide doped with the aluminium and magnesium is represented by Chemical Formula 2:
Liₐ₂Coₓ₂Mg_{y2}Al_{z2}M²_{w2}O_{2-b2}X_{b2}
with 0.9≤a2≤1.8, 0.953≤x2≤0.965, 0.002≤y2≤0.005, 0.032≤z2≤0.04, 0≤w2≤0.002, 0.9≤x2+y2+z2+w2≤1.1, with 0≤b2≤0.1, M² being at least one of B, Ba, Ca, Ce, Cr, Cu, Fe, Mn, Mo, Nb, Si, Sn, Sr, Ti, V, W, Zn, Y and Zr, and X being one or more of F, P, and S.

5. The positive electrode active material as claimed in any one of claims 1 to 4, wherein an average particle diameter (D₅₀) of the second positive electrode active material is about 1 µm to about 9 µm.

6. The positive electrode active material as claimed in any one of claims 1 to 5, wherein a doping amount of aluminium based on total 100 wt% of the first lithium cobalt-based oxide is about 0.9 wt% to about 1.1 wt%, and
wherein an aluminium doping amount based on 100 wt% of the total second lithium cobalt-based oxide is about 0.9 wt% to about 1.1 wt%.

7. The positive electrode active material as claimed in any one of claims 1 to 6, wherein a doping amount of aluminium in the second lithium cobalt-based oxide is greater than a doping amount of aluminium in the first lithium cobalt-based oxide.

8. The positive electrode active material as claimed in claim 7, wherein the doping amount of aluminium in the second lithium cobalt-based oxide is about 0.05 wt% to about 0.5 wt% greater than the doping amount of aluminium in the first lithium cobalt-based oxide.

9. The positive electrode active material as claimed in any one of claims 1 to 8, wherein the doping amount of magnesium based on total 100 wt% of the first lithium cobalt-based oxide is about 0.05 wt% to about 0.15 wt%, and
wherein the doping amount of magnesium based on total 100 wt% of the second lithium cobalt-based oxide is about 0.05 wt% to 0.15 wt%.

10. The positive electrode active material as claimed in any one of claims 1 to 9, wherein:
(i) based on total 100 wt% of the first positive electrode active material and the second positive electrode active material, the first positive electrode active material is about 50 wt% to about 95 wt% and the second positive electrode active material is about 5 wt% to about 50 wt%; and/or
(ii) the aluminium coating layer has a thickness of about 5 nm to about 200 nm; and/or
(iii) a deviation in the thickness of the coating layer within a single positive electrode active material particle is less than or equal to about 20%.

11. A method of preparing a positive electrode active material, the method comprising:
(i) preparing a first positive electrode active material including a first lithium cobalt-based oxide doped with aluminium and magnesium;
(ii) adding aluminium sulfate to an aqueous solvent and mixing to prepare a coating solution;
(iii) adding the first positive electrode active material to the coating solution and mixing to prepare a mixed solution;
(iv) removing an aqueous solvent from the mixed solution, drying the obtained product, and performing heat treatment to obtain a first positive electrode active material including an aluminium coating layer;
(v) preparing a second positive electrode active material including a second lithium cobalt-based oxide doped with aluminium and magnesium, and having an average particle diameter (D₅₀) that is less than the average particle diameter (D₅₀) of the first positive electrode active material;
(vi) adding aluminium oxide to the second positive electrode active material and performing heat treatment to obtain a second positive electrode active material including an aluminium coating layer; and
(vii) mixing the first positive electrode active material including the aluminium coating layer and the second positive electrode active material including the aluminium coating layer.

12. The method as claimed in claim 11, wherein in step (iii) the first positive electrode active material is added to the coating solution at a rate of about 30 seconds/500 g to about 2 minutes/500 g,
wherein the first positive electrode active material and the coating solution are mixed for about 15 to about 60 minutes, and
wherein pH of a supernatant after the mixing is about 5.5 to about 7.5.

13. The method as claimed in claim 11 or claim 12, wherein in step (iv), a coated product upon drying includes an aluminium coating layer on particle surfaces, with the aluminium coating layer having a mesh or spider web shape, and
wherein the heat treatment is performed at a temperature of about 730 °C to about 1000 °C.

14. A positive electrode, comprising
a positive electrode current collector, and
a positive electrode active material layer on the positive electrode current collector,
wherein the positive electrode active material layer includes the positive electrode active material as claimed in any one of claims 1 to 10;
optionally wherein:
(i) a loading level of the positive electrode active material layer is about 10 mg/cm² to about 30 mg/cm²; and/or
(ii) a density of the positive electrode active material layer is about 4.1 g/cc to about 4.5 g/cc.

15. A rechargeable lithium battery, comprising the positive electrode as claimed in claim 14;
a negative electrode; and
an electrolyte;
optionally wherein the rechargeable lithium battery has a charging voltage of greater than or equal to about 4.5 V.
